# EUROPEAN PATENT APPLICATION

(11) **EP 4 815 279 A1**
(43) Date of publication of application: **30.09.2026**
(21) Application number: 26166074.0
(22) Date of filing: 19.03.2026
(51) Int. Cl.: H02M 1/00, H02M 3/00

(54) **CIRCUIT FOR RESONANT CONVERTER CURRENT SENSE CIRCUIT DELAY COMPENSATION**

(30) Priority: 27.03.2025 US 202519092624
(71) Applicant: NXP USA, Inc, Austin, TX 78735 (US)
(72) Inventor: Vaccalluzzo, Marcello, 5656 AG Eindhoven (NL); Langeslag, Wilhemus Hinderikus Maria, 5656 AG Eindhoven (NL); Wortel, Klaas, 5656 AG Eindhoven (NL); Degen, Peter Theodorus Johannes, 5656 AG Eindhoven (NL); van Rens, Frank, 5656 AG Eindhoven (NL)
(74) Representative: Krott, Michel

(57) **Abstract**

Embodiments of a circuit for current sense circuit delay compensation are disclosed. In an embodiment, a circuit for current sense circuit delay compensation includes an operational amplifier (Opamp), a resistor, and a capacitor, where the Opamp is configured to amplify a difference between an input voltage from a current sense circuit and a voltage between the resistor and the capacitor.

## Description

### BACKGROUND

A resonant converter, for example, an Asymmetric Half Bridge (AHB) based resonant converter or a series inductor, parallel capacitor, series inductor (LLC) based resonant converter, can be used in applications requiring high power density and high efficiency due to its ability to achieve soft-switching with low switching losses and wide load regulation capabilities. In resonant converter applications, a resonant current sense circuit can introduce a delay. Therefore, there is a need to compensate for the delay introduced by the resonant current sense circuit.

### SUMMARY

Embodiments of a circuit for current sense circuit delay compensation are disclosed. In an embodiment, a circuit for current sense circuit delay compensation includes an operational amplifier (Opamp), a resistor, and a capacitor, where the Opamp is configured to amplify a difference between an input voltage from a current sense circuit and a voltage between the resistor and the capacitor. Other embodiments are also disclosed.

In an embodiment, the current sense circuit senses a current in a resonant converter, and the circuit introduces a variable zero in a transfer function to compensate for a variable pole introduced by the current sense circuit.

In an embodiment, the Opamp is further configured to amplify the difference between the input voltage from the current sense circuit and the voltage between the resistor and the capacitor to generate an output voltage, which is applied to the resistor.

In an embodiment, the Opamp introduces a variable zero in a transfer function of the circuit to compensate for a variable pole in the transfer function in order to make the circuit stable in a frequency range.

In an embodiment, the resistor includes a variable resistor.

In an embodiment, the Opamp includes a two-stage Opamp with a dominant pole compensation.

In an embodiment, the two-stage Opamp with the dominant pole compensation includes a first amplifier into which the input voltage from the current sense circuit and the voltage between the resistor and the capacitor are inputted, a second amplifier from which an output voltage is outputted, a variable resistor, and a second capacitor, and where the variable resistor and the second capacitor are connected between the first amplifier and the second amplifier.

In an embodiment, a difference between a product of a resistance value of the variable resistor and a capacitance value of the second capacitor and a product of a resistance value of the resistor and a capacitance value of the capacitor is within a threshold.

In an embodiment, the Opamp includes a two-stage Opamp with a miller compensation.

In an embodiment, the two-stage Opamp with the miller compensation includes a first amplifier into which the input voltage from the current sense circuit and the voltage between the resistor and the capacitor are inputted, a second amplifier from which an output voltage is outputted, a variable resistor, and a second capacitor, and where the variable resistor and the second capacitor are connected in parallel to the second amplifier.

In an embodiment, a circuit for converter current sense circuit delay compensation includes a two-stage operational amplifier (Opamp), a variable resistor, and a capacitor, where the two-stage Opamp is configured to amplify a difference between an input voltage from a current sense circuit and a voltage between the variable resistor and the capacitor to generate an output voltage, which is applied to the variable resistor.

In an embodiment, the two-stage Opamp introduces a variable zero in a transfer function of the circuit to compensate for a variable pole in the transfer function in order to make the circuit stable in a frequency range.

In an embodiment, the current sense circuit senses a current in a resonant converter, and the circuit introduces a variable zero in a transfer function to compensate for a variable pole introduced by the current sense circuit.

In an embodiment, the two-stage Opamp includes a two-stage Opamp with a dominant pole compensation, where the two-stage Opamp with the dominant pole compensation includes a first amplifier into which the input voltage from the current sense circuit and the voltage between the variable resistor and the capacitor are inputted, a second amplifier from which an output voltage is outputted, a second variable resistor, and a second capacitor, and where the second variable resistor and the second capacitor are connected between the first amplifier and the second amplifier.

In an embodiment, a difference between a product of a resistance value of the second variable resistor and a capacitance value of the second capacitor and a product of a resistance value of the variable resistor and a capacitance value of the capacitor is within a threshold.

In an embodiment, the two-stage Opamp includes a two-stage Opamp with a miller compensation.

In an embodiment, the two-stage Opamp with the miller compensation includes a first amplifier into which the input voltage from the current sense circuit and the voltage between the variable resistor and the capacitor are inputted, a second amplifier from which an output voltage is outputted, a second variable resistor, and a second capacitor, and where the second variable resistor and the second capacitor are connected in parallel to the second amplifier.

In an embodiment, a circuit for resonant converter current sense circuit delay compensation includes a two-stage operational amplifier (Opamp), a variable resistor, and a capacitor, where the two-stage Opamp is configured to amplify a difference between an input voltage from a current sense circuit and a voltage between the variable resistor and the capacitor to generate an output voltage, which is applied to the variable resistor, where the current sense circuit senses a current in a resonant converter, and where the two-stage Opamp introduces a variable zero in a transfer function of the circuit to compensate for a variable pole in the transfer function in order to make the circuit stable in a frequency range.

In an embodiment, the circuit introduces a variable zero in a transfer function to compensate for a variable pole introduced by the current sense circuit.

In an embodiment, the two-stage Opamp includes a two-stage Opamp with a dominant pole compensation or a miller compensation.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts a circuit in accordance with an embodiment of the invention.
Fig. 2 depicts a current sense circuit in accordance with an embodiment of the present invention.
Fig. 3 depicts an equivalent circuit of the current sense circuit depicted in Fig. 2.
Fig. 4 depicts a circuit for current sense circuit delay compensation in accordance with an embodiment of the present invention.
Fig. 5 depicts a delay compensated current sense circuit in accordance with an embodiment of the present invention.
Fig. 6 depicts a circuit for current sense circuit delay compensation having an operational amplifier (Opamp) with a dominant pole compensation in accordance with an embodiment of the present invention.
Fig. 7 depicts an example stability (STB) analysis of the circuit for current sense circuit delay compensation depicted in Fig. 6 before and after pole compensation at 400 kilohertz (KHz).
Fig. 8 depicts an example STB analysis of the circuit for current sense circuit delay compensation depicted in Fig. 6 before and after pole compensation at 3 megahertz (MHz).
Fig. 9 depicts a circuit for current sense circuit delay compensation having an Opamp with a miller compensation in accordance with an embodiment of the present invention.
Fig. 10 depicts an Opamp in accordance with an embodiment of the present invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

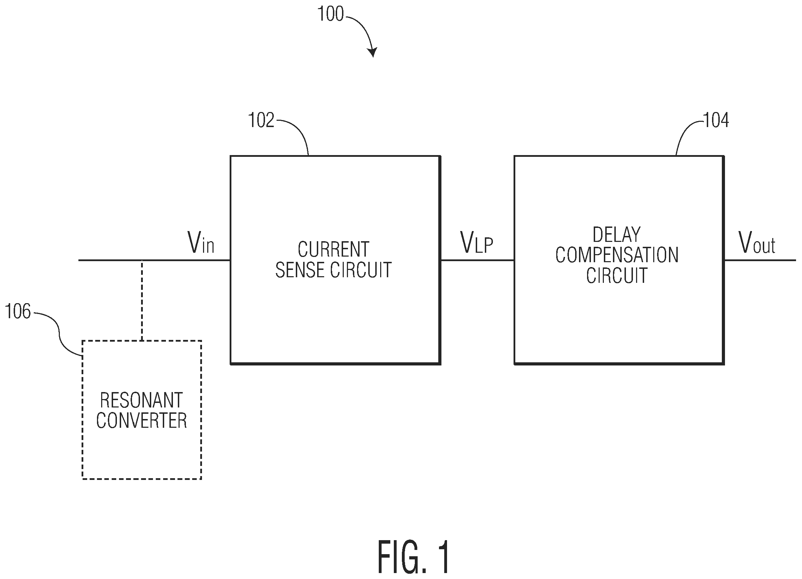

Fig. 1 depicts a circuit 100 in accordance with an embodiment of the invention. In the embodiment depicted in Fig. 1, the circuit 100, which is also referred to as a delay compensated current sense circuit, includes a current sense circuit 102 and a delay compensation circuit 104. In some embodiment, the current sense circuit 102 is configured to sense the current of a resonant converter 106. The circuit 100 can be used in various applications, such as consumer or enterprise applications, medical applications, computer applications, and/or industrial applications. The circuit 100 may be fully or partially implemented as at least one integrated circuit (IC) device. In some embodiments, at least one of the current sense circuit 102 and the delay compensation circuit 104 is implemented as an IC device. In some embodiments, the current sense circuit 102 and the delay compensation circuit 104 are located in different substrates and are implemented as separate IC devices. Although the depicted circuit 100 is shown in Fig. 1 with certain components and described with certain functionality herein, other embodiments of the circuit 100 may include fewer or more components to implement the same, less, or more functionality. In addition, although the circuit 100 is shown in Fig. 1 as being connected in a certain topology, the network topology of the circuit 100 is not limited to the topology shown in Fig. 1.

In the embodiment depicted in Fig. 1, the current sense circuit 102 is configured to sense resonant converter current. In the embodiment depicted in Fig. 1, the delay compensation circuit 104 is configured to compensate for a delay of the current sense circuit 102. In some embodiments, the current sense circuit senses a current in the resonant converter 106, and the delay compensation circuit 104 introduces a variable zero in a transfer function to compensate for a variable pole introduced by the current sense circuit. In some embodiments, the delay compensation circuit 104 includes an operational amplifier (Opamp), a resistor, and a capacitor, where the Opamp is configured to amplify a difference between an input voltage from the current sense circuit and a voltage between the resistor and the capacitor. In some embodiments, the Opamp is further configured to amplify the difference between the input voltage from the current sense circuit and the voltage between the resistor and the capacitor to generate an output voltage, which is applied to the resistor. In some embodiments, the Opamp introduces a variable zero in a transfer function of the circuit to compensate for a variable pole in the transfer function in order to make the circuit stable in a frequency range. In some embodiments, the resistor includes a variable resistor. In some embodiments, the Opamp includes a two-stage Opamp with a dominant pole compensation. In some embodiments, the two-stage Opamp with the dominant pole compensation includes a first amplifier into which the input voltage from the current sense circuit and the voltage between the resistor and the capacitor are inputted, a second amplifier from which an output voltage is outputted, a variable resistor, and a second capacitor, and the variable resistor and the second capacitor are connected between the first amplifier and the second amplifier. In some embodiments, a difference between a product of a resistance value of the variable resistor and a capacitance value of the second capacitor and a product of a resistance value of the resistor and a capacitance value of the capacitor is within a threshold. In some embodiments, the Opamp includes a two-stage Opamp with a miller compensation. In some embodiments, the two-stage Opamp with the miller compensation includes a first amplifier into which the input voltage from the current sense circuit and the voltage between the resistor and the capacitor are inputted, a second amplifier from which an output voltage is outputted, a variable resistor, and a second capacitor, and the variable resistor and the second capacitor are connected in parallel to the second amplifier.

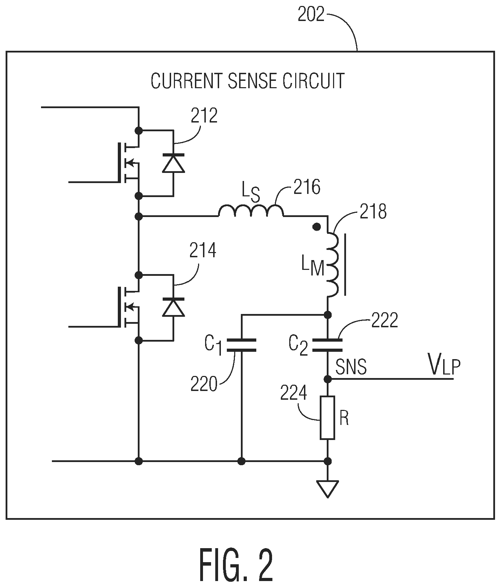

Fig. 2 depicts a current sense circuit 202 in accordance with an embodiment of the present invention. The current sense circuit 202 depicted in Fig. 2 is an embodiment of the current sense circuit 102 depicted in Fig. 1. However, the current sense circuit 102 depicted in Fig. 1 is not limited to the embodiment depicted in Fig. 2. In the embodiment depicted in Fig. 2, the current sense circuit 202 is a capacitive divider based current sense circuit that includes transistors 212, 214, an inductor 216 with an inductance value Ls, an inductor 218 with an inductance value L_{M}, a capacitor 220 with a capacitance value C₁, a capacitor 222 with a capacitance value C₂, and a resistor 224 with a resistance value R. The current sense circuit 202 behaves as a standard R/C filter such that the signals is delayed by the standard R/C filter. In Asymmetric Half Bridge (AHB) applications a sensing network is typically bigger (e.g., higher R and C values) compared to a sensing network in standard LLC applications. Consequently, the delay introduced by a current sense circuit is significant. The current sense circuit 202 may be fully or partially implemented as at least one integrated circuit (IC) device. Although the depicted current sense circuit 202 is shown in Fig. 2 with certain components and described with certain functionality herein, other embodiments of the current sense circuit 202 may include fewer or more components to implement the same, less, or more functionality. In addition, although the current sense circuit 202 is shown in Fig. 2 as being connected in a certain topology, the network topology of the current sense circuit 202 is not limited to the topology shown in Fig. 2.

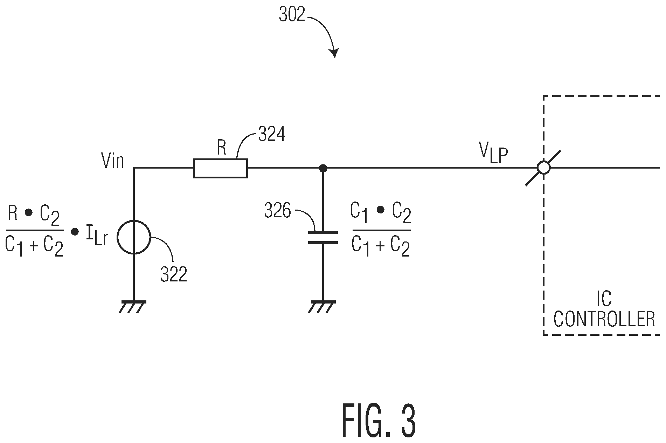

Fig. 3 depicts an equivalent circuit 302 of the current sense circuit 202 depicted in Fig. 2. In the embodiment depicted in Fig. 3, the equivalent circuit 302 includes a current source 322 with a current value $\frac{R ∗ C 2 ∗ ILr}{C 1 + C 2}$, a capacitor 326 with a capacitance value $\frac{C 1 ∗ C 2}{C 1 + C 2}$, and a resistor 224 with a resistance value R. The output voltage V_{LP} of the equivalent circuit 302 of the current sense circuit 202 can be represented as: ${V}_{LP} = \frac{\frac{1}{sC}}{\frac{1}{sC} + R} ⋅ Vin = \frac{1}{1 + sRC} ⋅ Vin ,$ where $C = \frac{C 1 ∗ C 2}{C 1 + C 2}$. The equivalent circuit 302/the current sense circuit 202 introduces a pole in the transfer function. A frequency programmable function (e.g., in an IC controller) F_{comp} can compensate for the variable delay. Considering that ${V}_{LP} = \frac{1}{1 + sRC} ⋅ Vin$*,* a delay compensation function F_{comp} can be represented as: ${V}_{LP} ∗ {F}_{comp} = Vin ,$ ${F}_{comp} = 1 + sRC ,$ However, a differentiating function $\frac{{V}_{out}}{{V}_{in}} = - sCR$ is typically not stable, especially in a wide programmable range.

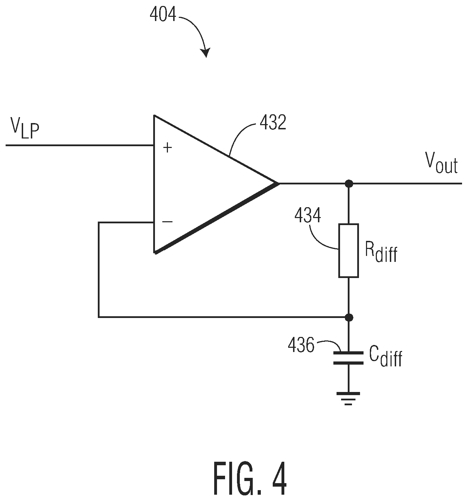

Fig. 4 depicts a circuit for current sense circuit delay compensation 404 in accordance with an embodiment of the present invention. The circuit for current sense circuit delay compensation 404 depicted in Fig. 4 is an embodiment of the delay compensation circuit 104 depicted in Fig. 1. However, the delay compensation circuit 104 depicted in Fig. 1 is not limited to the embodiment depicted in Fig. 4. In the embodiment depicted in Fig. 4, the circuit for current sense circuit delay compensation 404 has a programmable high frequency differentiating function that can provide a variable compensation for compensation stability. In the embodiment depicted in Fig. 4, the circuit for current sense circuit delay compensation 404 includes an operational amplifier (Opamp) 432, a resistor 434 with a resistance value R_{diff}, and a capacitor 436 with a capacitance value C_{diff}. The Opamp 432 amplifies the difference in voltages between two inputs, which are V_{LP} and the voltage between the resistor 434 and the capacitor 436. The circuit for current sense circuit delay compensation 404 may be fully or partially implemented as at least one integrated circuit (IC) device. For example, the circuit for current sense circuit delay compensation 404 may be implemented in an IC controller. The circuit for current sense circuit delay compensation 404 can generate an output signal Vₒᵤₜ approximately proportional to the rate of change (i.e., the derivative with respect to time) of its input signal V_{LP}. Although the depicted circuit for current sense circuit delay compensation 404 is shown in Fig. 4 with certain components and described with certain functionality herein, other embodiments of the circuit for current sense circuit delay compensation 404 may include fewer or more components to implement the same, less, or more functionality. In addition, although the circuit for current sense circuit delay compensation 404 is shown in Fig. 4 as being connected in a certain topology, the network topology of the circuit for current sense circuit delay compensation 404 is not limited to the topology shown in Fig. 4.

The transfer function of the circuit for current sense circuit delay compensation 404 can be represented as: ${F}_{comp} = \frac{{V}_{out}}{{V}_{LP}} = 1 + {sR}_{diff} {C}_{diff}$ The transfer function of the circuit for current sense circuit delay compensation 404 has a zero. In some embodiments, for a fixed value of C_{diff}, the frequency of the transfer function of the circuit for current sense circuit delay compensation 404 is changed by changing the R_{diff} in order to match the time constant of the application circuit. In some embodiments, R_{diff} is changed by a controller to make an automatic adapting compensator that can cover changes in applications (included changes due to tolerance) in a range from 400KHz to 3MHz (τ = 400ns to τ = 53ns).

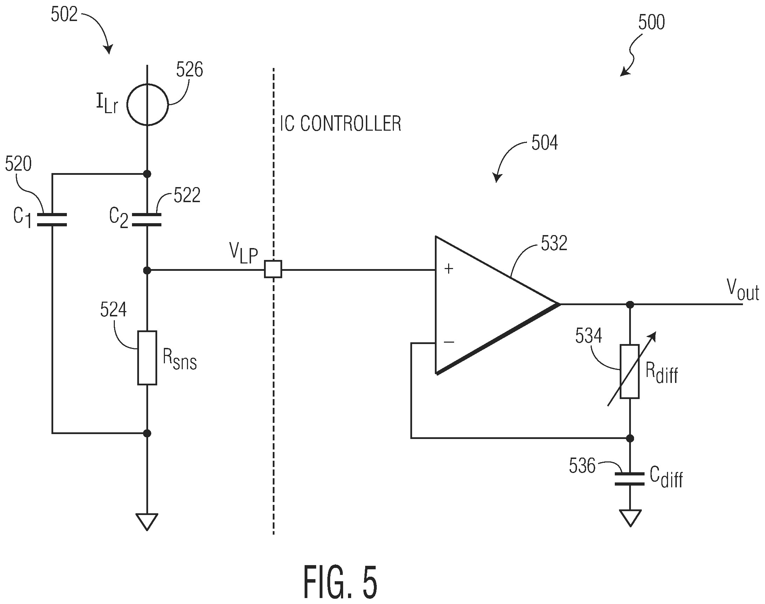

Fig. 5 depicts a delay compensated current sense circuit 500 in accordance with an embodiment of the present invention. The delay compensated current sense circuit 500 depicted in Fig. 5 is an embodiment of the circuit 100 depicted in Fig. 1. However, the circuit 100 depicted in Fig. 1 is not limited to the embodiment depicted in Fig. 5. In the embodiment depicted in Fig. 5, the delay compensated current sense circuit 500 includes a current sense circuit 502 and a circuit for current sense circuit delay compensation 504. In some embodiments, the circuit for current sense circuit delay compensation 504 introduces a variable zero in the transfer function of the delay compensated current sense circuit 500 to compensate for a variable pole in the transfer function of the delay compensated current sense circuit 500 introduced by the current sense circuit 502. The delay compensated current sense circuit 500 may be fully or partially implemented as at least one IC device. In some embodiments, at least one of the current sense circuit 502 and the circuit for current sense circuit delay compensation 504 is implemented as an IC device. In some embodiments, the current sense circuit 502 and the circuit for current sense circuit delay compensation 504 are located in different substrates and are implemented as separate IC devices. Although the delay compensated current sense circuit 500 is shown in Fig. 5 with certain components and described with certain functionality herein, other embodiments of the delay compensated current sense circuit 500 may include fewer or more components to implement the same, less, or more functionality. In addition, although the delay compensated current sense circuit 500 is shown in Fig. 5 as being connected in a certain topology, the network topology of the delay compensated current sense circuit 500 is not limited to the topology shown in Fig. 5.

In the embodiment depicted in Fig. 5, the current sense circuit 502 is configured to sense resonant converter current. In the embodiment depicted in Fig. 5, the current sense circuit 502 is a capacitive divider based current sense circuit that includes a current source 526 with a current I_{Lr}, a capacitor 520 with a capacitance value C₁, a capacitor 522 with a capacitance value C₂, and a resistor 524 with a resistance value R. The current sense circuit 502 behaves as a standard R/C filter such that the signals is delayed by the standard R/C filter.

In the embodiment depicted in Fig. 5, the circuit for current sense circuit delay compensation 504 has a programmable high frequency differentiating function that can provide a variable compensation for compensation stability. In the embodiment depicted in Fig. 5, the circuit for current sense circuit delay compensation 504 includes an operational amplifier (Opamp) 532, a variable resistor 534 with a variable resistance value R_{diff}, and a capacitor 536 with a capacitance value C_{diff}. The Opamp 532 amplifies the difference in voltages between two inputs, which are V_{LP} and the voltage between the variable resistor 534 and the capacitor 536, to generate an output voltage Voᵤₜ, which is applied to the resistor.

It is typically not easy to make a differentiator stable, especially in a wide programmable range. For example, considering a circuit with a differentiating function with a general two stage Opamp, there is a pole introduced by the feedback network: *P_{open_Loop} = C_{diff}R_{diff}.* This pole is at the same frequency of the circuit with a differentiating function, and it is variable with the R_{diff}, which can make it difficult to find an appropriate compensation. In accordance with an embodiment of the invention, the Opamp 532 introduces a variable zero in the transfer function to compensate the variable pole in order to make the circuit for current sense circuit delay compensation 504 stable in the entire range of frequency.

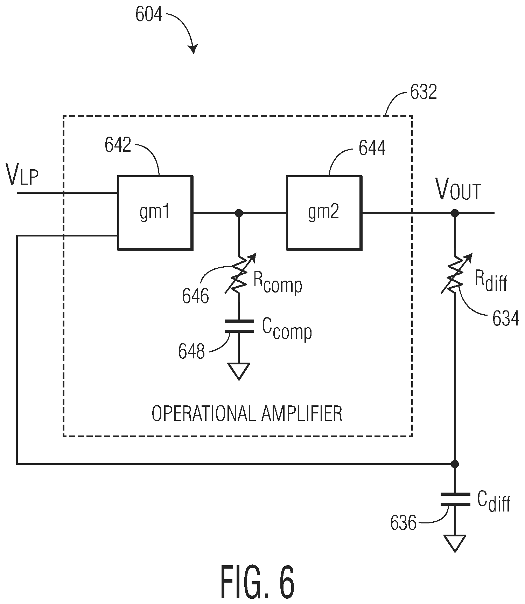

Fig. 6 depicts a circuit for current sense circuit delay compensation 604 having an operational amplifier (Opamp) 632 with a dominant pole compensation in accordance with an embodiment of the present invention. The circuit for current sense circuit delay compensation 604 depicted in Fig. 6 is an embodiment of the circuit for current sense circuit delay compensation 404 depicted in Fig. 4. However, the circuit for current sense circuit delay compensation 404 depicted in Fig. 4 is not limited to the embodiment depicted in Fig. 6. In the embodiment depicted in Fig. 6, the circuit for current sense circuit delay compensation 604 has a programmable high frequency differentiating function that can provide a variable compensation for compensation stability. In the embodiment depicted in Fig. 6, the circuit for current sense circuit delay compensation 604 includes a two-stage Opamp 632, a variable resistor 634 with a variable resistance value R_{diff}, and a capacitor 636 with a capacitance value C_{diff}. The Opamp 632 amplifies the difference in voltages between two inputs, which are V_{LP} and the voltage between the variable resistor 634 and the capacitor 636, to generate the output voltage Voᵤₜ, which is applied to the variable resistor 634. The circuit for current sense circuit delay compensation 604 may be fully or partially implemented as at least one integrated circuit (IC) device. Although the depicted circuit for current sense circuit delay compensation 604 is shown in Fig. 6 with certain components and described with certain functionality herein, other embodiments of the circuit for current sense circuit delay compensation 604 may include fewer or more components to implement the same, less, or more functionality. In addition, although the circuit for current sense circuit delay compensation 604 is shown in Fig. 6 as being connected in a certain topology, the network topology of the circuit for current sense circuit delay compensation 604 is not limited to the topology shown in Fig. 6.

In the embodiment depicted in Fig. 6, the Opamp 632 includes a first amplifier 642 with a transconductance gm1 into which the input voltage V_{LP} from a current sense circuit (e.g., the current sense circuit 502 depicted in Fig. 5) and the voltage between the variable resistor 634 and the capacitor 636 are inputted, a second amplifier 644 with a transconductance gm2 from which the output voltage Vₒᵤₜ is outputted, a variable resistor 646 with a variable resistance value R_{comp}, and a capacitor 648 with a capacitance value C_{comp}, where the variable resistor 646 and the capacitor 648 are connected between the first amplifier 642 and the second amplifier 644. Considering a dominant pole compensation, forcing *R_{comp} * C_{comp}* ≃ *R_{diff} * C_{diff},* the pole is compensated by the zero making the circuit stable. In some embodiments, a difference between the product of the resistance value R_{comp} of the variable resistor 646 and the capacitance value C_{comp} of the capacitor 648 and the product of the resistance value R_{diff} of the variable resistor 634 and the capacitance value C_{diff} of the capacitor 636 is within a threshold (e.g., 5% or 10% of the product of the resistance value R_{diff} of the variable resistor 634 and the capacitance value C_{diff} of the capacitor 636).

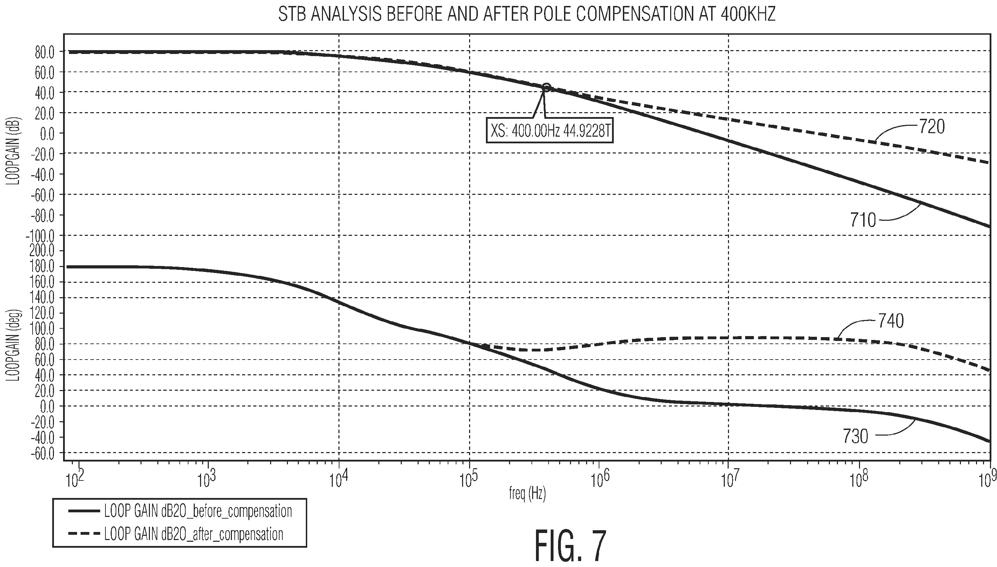

Fig. 7 depicts an example stability (STB) analysis of the circuit for current sense circuit delay compensation 604 depicted in Fig. 6 before and after pole compensation at 400KHz. As depicted in Fig. 7, loop gain dB20 before compensation, loop gain dB20 after compensation, loop gain phase before compensation, and loop gain phase after compensation are represented in curves 710, 720, 730, 740.

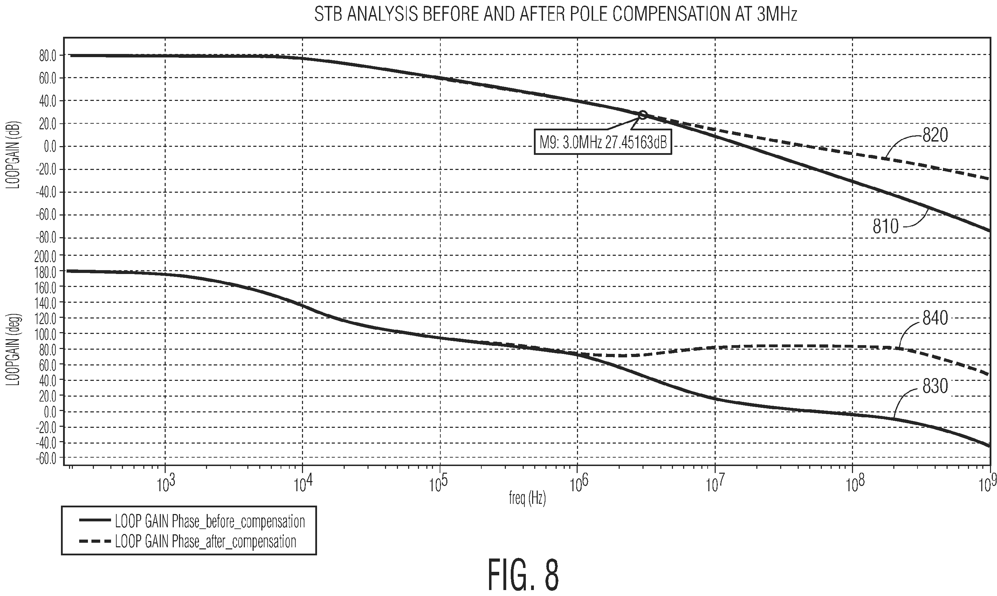

Fig. 8 depicts an example stability (STB) analysis of the circuit for current sense circuit delay compensation 604 depicted in Fig. 6 before and after pole compensation at 3MHz. As depicted in Fig. 8, loop gain dB20 before compensation, loop gain dB20 after compensation, loop gain phase before compensation, and loop gain phase after compensation are represented in curves 810, 820, 830, 840.

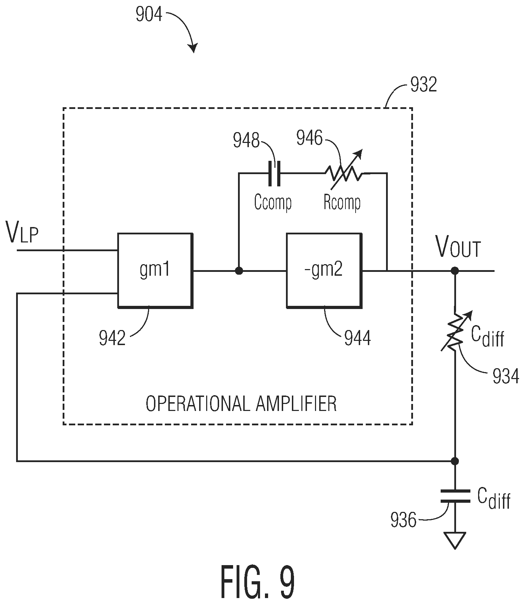

Fig. 9 depicts a circuit for current sense circuit delay compensation 904 having an operational amplifier (Opamp) 932 with a miller compensation in accordance with an embodiment of the present invention. The circuit for current sense circuit delay compensation 904 depicted in Fig. 9 is an embodiment of the circuit for current sense circuit delay compensation 404 depicted in Fig. 4. However, the circuit for current sense circuit delay compensation 404 depicted in Fig. 4 is not limited to the embodiment depicted in Fig. 9. In the embodiment depicted in Fig. 9, the circuit for current sense circuit delay compensation 904 has a programmable high frequency differentiating function that can provide a variable compensation for compensation stability. In the embodiment depicted in Fig. 9, the circuit for current sense circuit delay compensation 904 includes a two-stage Opamp 932, a variable resistor 934 with a variable resistance value R_{diff}, and a capacitor 936 with a capacitance value C_{diff}. The Opamp 932 amplifies the difference in voltages between two inputs, which are V_{LP} and the voltage between the variable resistor 934 and the capacitor 936 to generate the output voltage Voᵤₜ, which is applied to the variable resistor 934. The circuit for current sense circuit delay compensation 904 may be fully or partially implemented as at least one integrated circuit (IC) device. Although the depicted circuit for current sense circuit delay compensation 904 is shown in Fig. 9 with certain components and described with certain functionality herein, other embodiments of the circuit for current sense circuit delay compensation 904 may include fewer or more components to implement the same, less, or more functionality. In addition, although the circuit for current sense circuit delay compensation 904 is shown in Fig. 9 as being connected in a certain topology, the network topology of the circuit for current sense circuit delay compensation 904 is not limited to the topology shown in Fig. 9.

In the embodiment depicted in Fig. 9, the Opamp 932 includes a first amplifier 942 with a transconductance gm1 into which the input voltage V_{LP} from a current sense circuit (e.g., the current sense circuit 502 depicted in Fig. 5) and the voltage between the variable resistor 934 and the capacitor 936 are inputted, a second amplifier 944 with a transconductance -gm2 from which the output voltage Vₒᵤₜ is outputted, a variable resistor, a variable resistor 946 with a variable resistance value R_{comp}, and a capacitor 948 with a capacitance value C_{comp}, and where the variable resistor 946 and the capacitor 948 are connected in parallel to the second amplifier 944. The zero from the miller compensation network needs to follow the feedback network: $\left|\left(\frac{1}{gm 2}-{R}_{comp}\right)∗{C}_{comp}\right| ≃ \left|{R}_{diff}∗{C}_{diff}\right|$ In some embodiments, a difference between the product of the difference between $\frac{1}{gm 2}$ and the resistance value R_{comp} of the variable resistor 946 and the capacitance value C_{comp} of the capacitor 948 and the product of the resistance value R_{diff} of the variable resistor 934 and the capacitance value C_{diff} of the capacitor 936 is within a threshold (e.g., 5% or 10% of the product of the resistance value R_{diff} of the variable resistor 934 and the capacitance value C_{diff} of the capacitor 936). In the same way the variable poles created by the feedback network in open loop analysis are compensated by the variable zero in the compensation network making the differentiator stable in the entire range of frequency. In both cases, it is not strictly necessary that the zero in the compensation network match exactly the feedback network, the difference is tolerable until the desired phase margin is maintained.

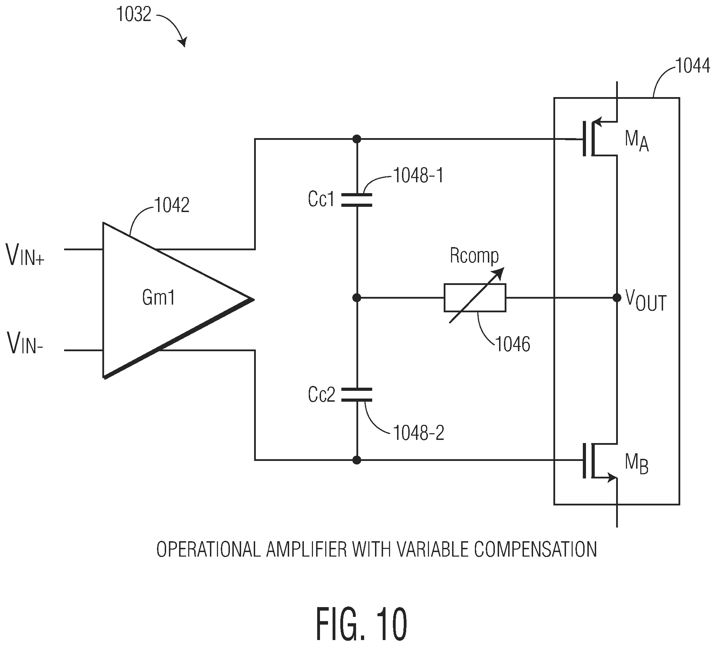

Fig. 10 depicts an operational amplifier (Opamp) 1032 in accordance with an embodiment of the present invention. The Opamp 1032 depicted in Fig. 10 is an embodiment of the Opamp 932 depicted in Fig. 9. However, the Opamp 932 depicted in Fig. 9 is not limited to the embodiment depicted in Fig. 10. In the embodiment depicted in Fig. 10, the Opamp 1032 includes a first amplifier 1042 with a transconductance gm1, a second amplifier 1044 with a transconductance - gm2 that includes transistors M_{A}, M_{B}, a variable resistor 1046 with a variable resistance value R_{comp}, and capacitors 1048-1, 1048-2 with capacitance values C_{c1}, C_{c2}. The Opamp 1032 may be fully or partially implemented as at least one integrated circuit (IC) device. Although the depicted Opamp 1032 is shown in Fig. 10 with certain components and described with certain functionality herein, other embodiments of the Opamp 1032 may include fewer or more components to implement the same, less, or more functionality. In addition, although the Opamp 1032 is shown in Fig. 10 as being connected in a certain topology, the network topology of the Opamp 1032 is not limited to the topology shown in Fig. 10.

Considering a case in which gmA and gmB >>1, it can be derived as: $\left|\left(\left(\frac{1}{{gm}_{A}}-{R}_{comp}\right)∗{C}_{c 1}\right)+\left(\left(\frac{1}{{gm}_{B}}-{R}_{comp}\right)∗{C}_{c 2}\right)\right| ≃ \left|{R}_{comp}∗\left({C}_{c 1}+{C}_{c 2}\right)\right|$ Then, for making the zero following the pole in the feedback network, it can be derived as: $\left|{R}_{comp}∗\left({C}_{c 1}+{C}_{c 2}\right)\right| ≃ \left|{R}_{diff}∗{C}_{diff}\right|$ In some embodiments, a difference between the product of the resistance value R_{comp} of the variable resistor 1046 and the sum of the capacitance values C_{c1}, C_{c2} of the capacitors 1048-1, 1048-2 and the product of the resistance value R_{diff} of the variable resistor 934 and the capacitance value C_{diff} of the capacitor 936 is within a threshold (e.g., 5% or 10% of the product of the resistance value R_{diff} of the variable resistor 934 and the capacitance value C_{diff} of the capacitor 936). The delay compensation can be confirmed by an example transient response, for example, by applying a ramp at the input, the output showing an anticipation around 400 nanoseconds (ns) for the 400KHz configuration and an anticipation around 53ns for the 3MHz configuration.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A circuit for current sense circuit delay compensation, the circuit comprising:
an operational amplifier (Opamp);
a resistor; and
a capacitor, wherein the Opamp is configured to amplify a difference between an input voltage from a current sense circuit and a voltage between the resistor and the capacitor.

2. The circuit of claim 1, wherein the current sense circuit senses a current in a resonant converter, and wherein the circuit introduces a variable zero in a transfer function to compensate for a variable pole introduced by the current sense circuit.

3. The circuit of claim 1 or 2, wherein the Opamp is further configured to amplify the difference between the input voltage from the current sense circuit and the voltage between the resistor and the capacitor to generate an output voltage, which is applied to the resistor.

4. The circuit of any preceding claim, wherein the Opamp introduces a variable zero in a transfer function of the circuit to compensate for a variable pole in the transfer function in order to make the circuit stable in a frequency range.

5. The circuit of any preceding claim, wherein the resistor comprises a variable resistor.

6. The circuit of any preceding claim, wherein the Opamp comprises a two-stage Opamp with a dominant pole compensation.

7. The circuit of claim 6, wherein the two-stage Opamp with the dominant pole compensation comprises a first amplifier into which the input voltage from the current sense circuit and the voltage between the resistor and the capacitor are inputted, a second amplifier from which an output voltage is outputted, a variable resistor, and a second capacitor, and wherein the variable resistor and the second capacitor are connected between the first amplifier and the second amplifier.

8. The circuit of claim 7, wherein a difference between a product of a resistance value of the variable resistor and a capacitance value of the second capacitor and a product of a resistance value of the resistor and a capacitance value of the capacitor is within a threshold.

9. The circuit of any preceding claim, wherein the Opamp comprises a two-stage Opamp with a miller compensation.

10. The circuit of claim 9, wherein the two-stage Opamp with the miller compensation comprises a first amplifier into which the input voltage from the current sense circuit and the voltage between the resistor and the capacitor are inputted, a second amplifier from which an output voltage is outputted, a variable resistor, and a second capacitor, and wherein the variable resistor and the second capacitor are connected in parallel to the second amplifier.
